(19) **Europäisches Patentamt / European Patent Office / Office européen des brevets**

(11) **EP 3 652 835 B1**

(12) **FASCICULE DE BREVET EUROPEEN**

(45) Date de publication et mention de la délivrance du brevet:
**26.05.2021 Bulletin 2021/21**

(21) Numéro de dépôt: **18752559.7**

(22) Date de dépôt: **05.07.2018**

(51) Int Cl.:
*H02J 1/00* (2006.01)   *H02J 3/36* (2006.01)

(86) Numéro de dépôt international:
**PCT/FR2018/051682**

(87) Numéro de publication internationale:
**WO 2019/012209 (17.01.2019 Gazette 2019/03)**

(54) **PROCÉDÉ DE CONTRÔLE D'UN RÉSEAU HAUTE TENSION COURANT CONTINU EN CAS DE DÉFAILLANCE**

VERFAHREN ZUR STEUERUNG EINES HOCHSPANNUNGSGLEICHSTROMNETZES BEI EINEM DEFEKT

METHOD FOR CONTROLLING A HIGH-VOLTAGE DIRECT-CURRENT NETWORK IN THE EVENT OF A FAULT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2017 FR 1756538**

(43) Date de publication de la demande:
**20.05.2020 Bulletin 2020/21**

(73) Titulaire: **Supergrid Institute
69100 Villeurbanne (FR)**

(72) Inventeurs:
• **BERTINATO, Alberto
69007 Lyon (FR)**
• **LUSCAN, Bruno
69007 Lyon (FR)**
• **BENCHAIB, Abdelkrim
69007 Lyon (FR)**
• **SHINODA, Kosei
69007 Lyon (FR)**
• **POULLAIN, Serge
69007 Lyon (FR)**

(74) Mandataire: **Opilex
32, rue Victor Lagrange
69007 Lyon (FR)**

(56) Documents cités:
**WO-A1-2007/033619   US-A1- 2013 258 724**

• **LESCALE V F ET AL: "Challenges with Multi-Terminal UHVDC Transmissions", POWER SYSTEM TECHNOLOGY AND IEEE POWER INDIA CONFERENCE, 2008. POWERCON 2008. JOINT INTERNATIONAL CONFERENCE ON, IEEE, PISCATAWAY, NJ, USA, 12 octobre 2008 (2008-10-12), pages 1-7, XP031404406, ISBN: 978-1-4244-1763-6**
• **CIAPESSONI EMANUELE ET AL: "Assessing the impact of multi-terminal HVDC grids for wind integration on future scenarios of a real-world AC power system using grid code compliant open models", 2017 IEEE MANCHESTER POWERTECH, IEEE, 18 juin 2017 (2017-06-18), pages 1-6, XP033123632, DOI: 10.1109/PTC.2017.7981026**
• **LI WENTING ET AL: "A novel control strategy for AC fault ride through in a MTDC system with offshore wind farms", 2014 INTERNATIONAL POWER ELECTRONICS AND APPLICATION CONFERENCE AND EXPOSITION, IEEE, 5 novembre 2014 (2014-11-05), pages 56-61, XP032734710, DOI: 10.1109/PEAC.2014.7037828**

## Description

L'invention concerne les réseaux de transmission et/ou de distribution de courant continu sous tension élevée, généralement désignés sous l'acronyme HVDC. L'invention porte en particulier sur la sécurité et la continuité de service d'un réseau HVDC lors de l'apparition d'un défaut.

Les réseaux HVDC sont notamment envisagés comme une solution à l'interconnexion de sites de production d'électricité disparates ou non synchrones, apparaissant avec le développement des énergies renouvelables. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension de l'ordre de 50 kV et plus.

Pour de la transmission d'électricité point à point, un sectionnement peut être réalisé par l'intermédiaire d'un convertisseur en bout de ligne, muni d'un disjoncteur coté alternatif. Par contre, le sectionnement ne peut plus être réalisé par un tel convertisseur dans de la transmission multipoints ou multinoeuds, un tel réseau étant désigné par l'acronyme MTDC. La coupure du courant continu dans de tels réseaux est un enjeu crucial conditionnant directement la faisabilité et le développement de tels réseaux. En effet, l'apparition d'un court-circuit au niveau d'un nœud se propage très rapidement dans tout le réseau. En l'absence de coupure assez rapide au niveau du nœud, le courant de court-circuit continue à croître et peut atteindre plusieurs dizaines de kA en quelques ms. Le courant de court-circuit peut alors dépasser le pouvoir de coupure des disjoncteurs courant continu des différents nœuds. Le courant de court-circuit pourrait aussi endommager l'électronique de puissance utilisée dans les convertisseurs AC/DC au niveau des nœuds du réseau. Les coupures par les différents interrupteurs peuvent également altérer la stabilité du réseau multipoints.

Lors de l'apparition d'un défaut sur une des lignes haute tension courant continu, le cycle de fonctionnement usuel est généralement le suivant :

- un fonctionnement initial avec un nombre N de lignes haute tension. Préalablement au défaut, les transferts de puissance entre les systèmes AC connectés aux différents nœuds du réseau MTDC sont réalisés au moyen de ces N lignes ;
- un défaut par court-circuit sur une des lignes haute tension induit une chute de tension qui interrompt le transfert de puissance à travers un nombre k de lignes. Le nombre de lignes participant aux transferts de puissance est réduit à un nombre N-k ;
- après avoir isolé la ligne haute tension en faute, on met en œuvre un certain nombre d'actions de contrôle sur les convertisseurs AC/DC. Ces actions de contrôle sont requises pour garantir le rétablissement des niveaux de tension et de puissance souhaités ;
- les transferts de puissance entre les systèmes AC connectés sont mis en œuvre avec un nombre N-1 de lignes.

Durant la phase allant du fonctionnement à N-k lignes au fonctionnement à N-1 lignes, la stabilité des systèmes AC connectés peut être fortement affectée. Même si cette phase est relativement brève et met en œuvre une protection du système sélective, tous le réseau peut être impacté par ce problème de stabilité. Ceci est problématique du fait qu'une telle phase avec un réseau MTDC est plus complexe et plus longue que dans un réseau alternatif. Il existe donc un besoin pour une solution permettant d'augmenter la marge de stabilité transitoire des systèmes AC lors d'un tel défaut.

Une architecture connue comporte un convertisseur multiniveaux MMC à chaque nœud du réseau. Les convertisseurs multiniveaux MMC sont basés sur des IGBT. Dans cette architecture, une bobine de limitation de courant est placée à chaque extrémité des lignes hautes tension. Les bobines permettent de limiter la vitesse de croissance du courant lors de l'apparition d'un court-circuit, ce qui permet d'éviter le blocage des IGBT des convertisseurs MMC. Des condensateurs sont positionnés à certains nœuds du réseau afin d'éviter que la tension ne retombe en deçà d'un certain niveau par rapport à la tension nominale. Afin de favoriser l'isolation du défaut en un temps réduit, des disjoncteurs courant continu hybrides ultrarapides sont positionnés à chaque extrémité des lignes. Le but d'une telle architecture est d'isoler la ligne en défaut tout en conservant le contrôle des convertisseurs durant une phase transitoire, afin de permettre une reprise automatique du transfert de puissance à travers les lignes haute tension.

Cependant, la présence des inductances altère fortement le comportement dynamique du réseau et induit des pertes importantes. Par ailleurs, les inductances et les condensateurs présentent un coût et un encombrement gênant considérablement leur déploiement. Les interrupteurs ultrarapides présentent également un coût et une complexité rédhibitoires. Des procédés de contrôle de réseaux de haute tension à courant continu à nœuds multiples sont connus de: LESCALE, V. F. et al.: "Challenges with Multi-Terminal UHVDC Transmissions", POWER SYSTEM TECHNOLOGY AND IEEE POWER INDIA CONFERENCE, 2008. POWERCON 2008. JOINT INTERNATIONAL CONFERENCE ON, IEEE, PISCATAWAY, NJ, USA, 12 octobre 2008 (2008-10-12), pages 1-7, XP031404406, ISBN: 978-1-4244-1763-6 ou de CIAPESSONI EMANUELE et al.: "Assessing the impact of multi-terminal HVDC grids for wind intégration on future scénarios of a real-world AC power system using grid code compliant open models",2017 IEEE MANCHESTER POWERTECH, IEEE, 18 juin 2017 (2017-06-18), pages 1-6, XP033123632, DOI: 10.1109 / PTC.2017.7981026 et aussi de la demande US 2013/258724 A1.

L'invention vise à résoudre un ou plusieurs de ces inconvénients. L'invention porte ainsi sur un procédé de contrôle d'un réseau haute tension à courant continu à multiples nœuds, tel que défini à la revendication 1.

L'invention porte également sur les variantes des revendications dépendantes. L'homme du métier comprendra que chacune des caractéristiques des revendications dépendantes peut être combinée indépendamment aux caractéristiques de la revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

- la figure 1 est un exemple simplifié d'un réseau haute tension courant continu pour la mise en œuvre de l'invention ;
- la figure 2 est un schéma d'un premier exemple de conception de poste de conversion pouvant être mis en œuvre selon l'invention ;
- la figure 3 est un schéma d'un deuxième exemple de conception de poste de conversion pouvant être mis en œuvre selon l'invention ;
- la figure 4 est un diagramme de l'évolution de la puissance sur un pôle en défaut lors de l'apparition d'une défaillance ;
- la figure 5 est un diagramme de l'évolution de la puissance sur le pôle sain ;
- les figures 6 et 7 illustrent la somme de puissance échangée sur deux pôles en fonction du niveau de puissance transitoire disponible pour les postes de conversion ;
- les figures 8 à 11 illustrent différents paramètres électriques sur un exemple de réseau mettant en œuvre un procédé de contrôle selon l'invention.

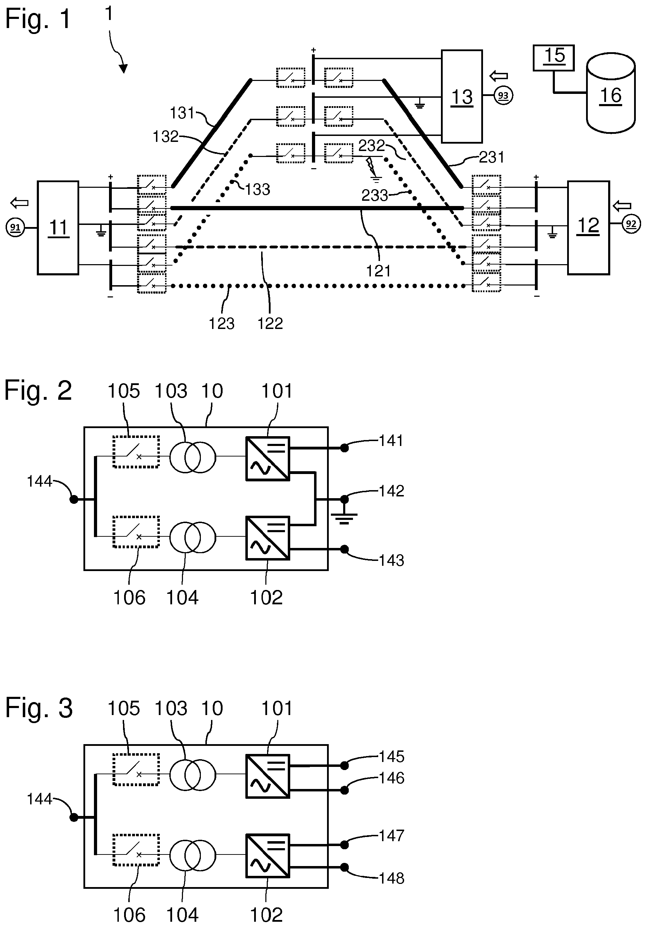

La figure 1 est une représentation schématique simplifiée d'un exemple de réseau haute tension courant continu 1 à multiples nœuds. Le réseau 1 comporte des postes de conversion 11, 12 et 13. L'invention est volontairement décrite pour un réseau 1 simplifié afin de faciliter la compréhension, mais peut bien entendu s'appliquer à un réseau haute tension courant continu 1 comportant plus de trois postes de conversion. Le réseau 1 comporte un dispositif de contrôle 15 configuré pour déterminer l'état du réseau et configuré pour communiquer avec les postes de conversion 11 à 13.

Les postes de conversion 11 à 13 comportent chacun :

- trois pôles formant une interface réseau continu, ici un pôle positif, un pôle négatif et un pôle de retour connecté à la terre ;

- une interface réseau alternatif ;
- une structure de conversion AC/DC détaillée ultérieurement.

L'interface réseau alternatif du poste 11 est connectée à un réseau alternatif local 91, l'interface réseau alternatif du poste 12 est connectée à un réseau alternatif local 92, et l'interface réseau alternatif du poste 13 est connectée à un réseau alternatif local 93.

Le réseau 1 comporte des lignes hautes tension. Le pôle positif du poste 11 et le pôle positif du poste 12 sont connectés par l'intermédiaire d'une ligne électrique haute tension 121. Le pôle positif du poste 11 et le pôle positif du poste 13 sont connectés par l'intermédiaire d'une ligne électrique haute tension 131. Le pôle positif du poste 12 et le pôle positif du poste 13 sont connectés par l'intermédiaire d'une ligne électrique haute tension 231. Les lignes électriques haute tension des pôles positifs sont ici illustrées en trait plein.

Le pôle négatif du poste 11 et le pôle négatif du poste 12 sont connectés par l'intermédiaire d'une ligne électrique haute tension 123. Le pôle négatif du poste 11 et le pôle négatif du poste 13 sont connectés par l'intermédiaire d'une ligne électrique haute tension 133. Le pôle négatif du poste 12 et le pôle négatif du poste 13 sont connectés par l'intermédiaire d'une ligne électrique haute tension 233. Les lignes électriques haute tension des pôles négatifs sont ici illustrées en pointillés.

Le pôle de retour du poste 11 et le pôle de retour du poste 12 sont avantageusement connectés par l'intermédiaire d'une ligne électrique 122. Le pôle de retour du poste 11 et le pôle de retour du poste 13 sont avantageusement connectés par l'intermédiaire d'une ligne électrique 132. Le pôle de retour du poste 12 et le pôle de retour du poste 13 sont avantageusement connectés par l'intermédiaire d'une ligne électrique 232. Les lignes électriques des pôles de retour sont ici illustrées en trait discontinu. Les lignes de retour 122, 132 et 232 sont ici des lignes haute tension mais peuvent également être des lignes plus basse tension. On peut éventuellement envisager de conduire un courant de retour par la terre plutôt que par des lignes de retour.

Ainsi, chacun des pôles d'un poste de conversion est connecté à un pôle des deux autres postes de conversion, par l'intermédiaire d'une ligne électrique haute tension.

Chacune des extrémités de ces lignes électriques hautes tension peut être connectée au pôle d'un poste par l'intermédiaire d'un interrupteur non référencé. Un tel interrupteur est par exemple un disjoncteur de type mécanique. Bien que non illustré, un sectionneur commandé à commutation rapide peut être connecté en série avec un tel interrupteur entre la ligne haute tension et le pôle du poste correspondant. Pour une ligne de retour plus basse tension, un tel interrupteur peut être remplacé par un disjoncteur à tension plus faible pour permettre un transfert de courant.

Chacun des postes de conversion 11 à 13 est configuré pour pouvoir maintenir une tension nominale constante sur chacun de ses pôles, tout en pouvant moduler la puissance échangée sur les pôles à cette tension nominale en pouvant appeler ou injecter une intensité accrue sur l'un d'eux pendant une durée prédéfinie.

On pourra par exemple considérer que la tension correspond à la tension nominale si elle est comprise dans un intervalle de +10%/- 20% par rapport à cette tension nominale, de préférence +5%/- 10% par rapport à cette tension nominale. De tels postes de conversion 11 à 13 incluent chacun au moins deux convertisseurs AC/DC capables d'appeler ou d'injecter une intensité accrue sur leur pôle respectif pendant une durée de maintien prédéfinie et avec une rampe d'augmentation prédéfinie.

L'intensité accrue d'un convertisseur pourra soit correspondre à une intensité supérieure à l'intensité instantanée échangée sur son pôle, soit correspondre à une intensité supérieure à son intensité nominale pour sa tension nominale. Dans le premier cas, l'intensité accrue reste inférieure ou égale à l'intensité nominale du convertisseur, dans le second cas, l'intensité accrue est supérieure à son intensité nominale.

Les convertisseurs des postes de conversion 11 à 13 peuvent par exemple être de type modulaire multi niveau ou MMC (pour Modular Multi-Level Converter en langue anglaise), de type VSC (pour Voltage Source Converter en langue anglaise), ou de type AAC (pour Alternative Arm Converter en langue anglaise). L'invention sera par la suite décrite avec des convertisseurs de type MMC, bien que l'invention ne soit pas limitée à une telle configuration.

La figure 2 est une représentation schématique d'un premier exemple de structure de poste de conversion 10 pouvant être mise en œuvre dans le cadre de l'invention. Le poste de conversion 10 est ici de type bipolaire. Le poste de conversion 10 comporte ici une interface réseau continu munie d'un pôle positif 141, d'un pôle de retour 142, et d'un pôle négatif 143. Le poste de conversion 10 comporte ici une interface réseau alternatif munie d'un pôle 144. L'interface réseau alternatif est ici associée à des réseaux ou équipements locaux alternatifs (par exemple des générateurs électriques comme des champs d'éoliennes, des usines marémotrices, des centrales électronucléaires, des centrales électriques thermiques ou encore des générateurs photovoltaïques, ou des réseaux locaux de transport ou de consommation).

Le poste de conversion 10 comporte deux branches de puissance entre l'interface réseau alternatif et l'interface réseau continu. Une première branche de puissance inclut un convertisseur MMC 101. L'interface continu du convertisseur 101 est connectée au pôle 141 et au pôle 142. Une deuxième branche de puissance inclut un convertisseur MMC 102. L'interface continu du convertisseur 102 est connectée au pôle 143 et au pôle 142. Une configuration avec ségrégation de pôles permet d'éviter un risque de propagation d'un défaut d'un pôle vers l'autre pôle.

L'interface alternatif du convertisseur MMC 101 est ici avantageusement connectée au pôle 144 par l'intermédiaire d'un circuit de protection de la première branche de puissance. Le circuit de protection comprend ici un interrupteur 105 et un transformateur 103 connectés en série entre le pôle 144 et l'interface alternatif du convertisseur MMC 101. L'interrupteur 105 est par exemple un disjoncteur de type mécanique. Le circuit de protection peut également inclure un limiteur de courant (non illustré) connecté en série entre l'interface alternatif du convertisseur MMC 101 et le pôle 144.

L'interface alternatif du convertisseur MMC 102 est ici avantageusement connectée au pôle 144 par l'intermédiaire d'un circuit de protection de la deuxième branche de puissance. Le circuit de protection comprend ici un interrupteur 106 et un transformateur 104 connectés en série entre le pôle 144 et l'interface alternatif du convertisseur MMC 102. L'interrupteur 106 est par exemple un disjoncteur de type mécanique ou un sectionneur commandé à commutation rapide. Le circuit de protection peut également inclure un limiteur de courant connecté en série entre l'interface alternatif du convertisseur MMC 102 et le pôle 144.

En fonctionnement normal, le pôle positif 141 permet d'échanger la moitié de la puissance électrique du pôle alternatif 144, le pôle négatif 143 permettant d'échanger l'autre moitié de la puissance électrique de ce pôle alternatif 144.

Selon deux aspects de l'invention, chaque convertisseur MMC 101 et 102 est dimensionné et configuré pour pouvoir échanger sélectivement (par appel ou injection de courant), sur un pôle de l'interface courant continu :

- une puissance transitoire accrue au plus égale à sa puissance nominale, en maintenant sa tension nominale constante sur son pôle; et/ou
- une puissance transitoire dépassant sa puissance nominale pendant une durée de maintien prédéfinie, en maintenant sa tension nominale constante sur ses pôles 141 à 143. La puissance transitoire est par exemple au moins égale à 150% de la puissance nominale du convertisseur MMC, et de préférence au moins égale à 200% de cette puissance nominale. Dans la configuration illustrée, la puissance nominale de chaque convertisseur MMC 101 ou 102 est la moitié de la puissance nominale du poste de conversion 10. La durée de maintien prédéfinie est par exemple au moins égale à 100 ms, de préférence au moins égale à 200 ms et peut par exemple atteindre 500ms. Le temps de passage requis entre la puissance nominale vers la puissance transitoire maximale du convertisseur est avantageusement inférieur à 100ms.

Plus précisément, chaque convertisseur MMC 101 ou 102 est configuré pour échanger une puissance accrue sur un pôle de l'interface courant continu en maintenant une tension nominale constante sur ce pôle et en appelant ou en injectant une intensité accrue sur ce pôle avec une durée de croissance prédéfinie. La puissance électrique transitoire accrue peut ainsi rapidement être atteinte sur un pôle considéré comme sain du poste de conversion 10.

On fournit ainsi une puissance électrique suffisante en compensation par un pôle sain, afin d'éviter d'altérer la stabilité transitoire du réseau alternatif connecté au pôle 144.

Lorsque les convertisseurs du poste de conversion 10 sont contrôlables en courant (par exemple des convertisseurs basés sur des redresseurs à ponts complets), l'autre convertisseur peut avantageusement limiter le courant sur le pôle en défaut lors de la détection de ce défaut.

Les convertisseurs MMC 101 et 102 sont par exemple de type à demi-ponts. Les convertisseurs MMC 101 et 102 peuvent inclure des IGBT. Les convertisseurs 101 et 102 contrôlent de façon connue en soi le flux de puissance entre leur interface alternatif et leur interface continue.

En maintenant une tension nominale constante sur les différents pôles 141 à 143 on garantit la continuité de service des postes de conversion 10, et on minimise l'impact sur la stabilité transitoire du réseau alternatif connecté au pôle 144.

Un exemple de mode de commande des postes de conversion 10 et leur interaction avec le dispositif de contrôle 15 sera détaillé ultérieurement.

La figure 3 est une représentation schématique d'un deuxième exemple de structure de poste de conversion 10 pouvant être mise en œuvre dans le cadre de l'invention. Le poste de conversion 10 est ici de type double monopolaire. Le poste de conversion 10 comporte ici une interface réseau continu munie d'un premier pôle positif 145, d'un deuxième pôle positif 147, d'un premier pôle négatif 146 et d'un deuxième pôle négatif 148. Le poste de conversion 10 comporte ici une interface réseau alternatif munie d'un pôle 144, identique à celle de l'exemple de la figure 2.

Le poste de conversion 10 comporte deux branches de puissance entre l'interface réseau alternatif et l'interface réseau continu. Une première branche de puissance inclut un convertisseur MMC 101. L'interface continu du convertisseur 101 est connectée au pôle 145 et au pôle 146. Une deuxième branche de puissance inclut un convertisseur MMC 102. L'interface continu du convertisseur 102 est connectée au pôle 147 et au pôle 148. Une telle configuration est dite double monopolaire. Une telle configuration avec ségrégation de pôles permet d'éviter un risque de double défaut simultané de pôle à pôle.

Le convertisseur MMC 101 est ici avantageusement connecté au pôle 144 par l'intermédiaire d'un circuit de protection de la première branche de puissance, le circuit de protection pouvant être identique à celui décrit pour la première branche en référence à la figure 2. Le convertisseur MMC 102 est ici avantageusement connecté au pôle 144 par l'intermédiaire d'un circuit de protection de la deuxième branche de puissance, le circuit de protection pouvant être identique à celui décrit pour la première branche en référence à la figure 2.

En fonctionnement normal, le pôle positif 145 et le pôle négatif 146 permette d'échanger la moitié de la puissance électrique du pôle alternatif 144, le pôle positif 147 et le pôle négatif 148 permettant d'échanger l'autre moitié de la puissance électrique de ce pôle alternatif 144.

Chaque convertisseur MMC 101 et 102 est dimensionné et configuré pour pouvoir échanger sélectivement (par appel ou injection de courant), sur un pôle de l'interface courant continu :

- une puissance transitoire accrue par rapport à la puissance instantanée, cette puissance accrue étant au plus égale à sa puissance nominale, en maintenant sa tension nominale constante sur son pôle ; et/ou
- une puissance transitoire dépassant sa puissance nominale, à l'issue d'une durée au plus égale à une durée de croissance prédéfinie, en maintenant sa tension nominale constante sur ses pôles 145 à 148. La puissance transitoire est par exemple au moins égale à 150% de la puissance nominale du convertisseur MMC, et de préférence au moins égale à 200% de cette puissance nominale. Dans la configuration illustrée, la puissance nominale de chaque convertisseur MMC 101 ou 102 est la moitié de la puissance nominale du poste de conversion 10. La durée de croissance prédéfinie est par exemple au plus égal à 100ms, de préférence au plus égale à 50ms. Avantageusement, chaque convertisseur MMC 101 et 102 est configuré pour pouvoir échanger sélectivement une puissance dépassant sa puissance nominale pendant une durée de maintien prédéfinie, avantageusement au moins égale à 200 ms, de préférence au moins égale à 500 ms. Plus précisément, chaque convertisseur MMC 101 ou 102 est configuré pour échanger une puissance accrue sur un pôle de l'interface courant continu en maintenant une tension nominale constante sur ce pôle et en appelant ou en injectant un courant accru sur ce pôle avant l'expiration de la durée de croissance prédéfinie. La puissance électrique transitoire accrue peut ainsi être échangée sur un pôle considéré comme sain du poste de conversion 10.

Simultanément à l'échange de la puissance accrue sur un pôle de l'interface courant continu par un convertisseur MMC, la puissance échangée par l'autre convertisseur MMC sur un pôle considéré comme en défaut devient très réduite.

Ce deuxième exemple permet de fournir une puissance électrique suffisante en compensation par un pôle sain, afin d'éviter de déstabiliser le réseau alternatif connecté au pôle 144.

Un mode de commande d'un tel poste de conversion 10 peut être similaire à celui du pôle de conversion 10 détaillé en référence à la figure 2.

Pour mettre en œuvre le contrôle des différents postes de conversion 11 à 13 illustrés à la figure 1, le dispositif de contrôle 15 dispose d'un accès à une base de données 16. Pour chacun des postes de conversion, la base de données 16 mémorise :

- l'intensité maximale à la tension nominale que chaque pôle d'un poste de conversion peut supporter, c'est-à-dire l'intensité nominale pour ce pôle, et/ou une surintensité (intensité supérieure à l'intensité nominale) pour ce pôle qui peut être supportée pendant une durée de maintien prédéfinie ;
- la durée de croissance ou temps de passage vers cette intensité accrue, et avantageusement la durée de maintien prédéfinie pendant laquelle une éventuelle surintensité peut être appliquée.

En fonction des informations disponibles dans cette base de données 16, le dispositif de contrôle 15 peut calculer la puissance transitoire accrue que chacun des postes de conversion 11 à 13 peut appliquer sur un pôle sain (et déterminer une durée de maintien prédéfinie si cette puissance accrue est supérieure à la puissance nominale). Le dispositif de contrôle 15 peut alors déterminer quels postes de conversion et quelles puissances transitoires accrues ces postes de conversion doivent appliquer sur le pôle sain afin de conserver la même quantité de puissance échangée, afin de minimiser l'impact sur la stabilité des d'éviter de déstabiliser les réseaux alternatifs locaux.

Le dispositif de contrôle 15 peut identifier répétitivement les puissances instantanées échangées par les postes de conversion sur leurs pôles respectifs. Sur la base des puissances échangées identifiées, le dispositif de contrôle peut déterminer les puissances transitoires accrues à appliquer par chaque convertisseur sur un pôle, en cas de défaut sur l'autre pôle. Après avoir déterminé ces puissance transitoires accrues, le dispositif de contrôle 15 envoie une consigne aux postes de conversion 11 à 13. Cette consigne inclut, pour chaque poste de conversion 11 à 13, la puissance déterminée à échanger sur le pôle sain ainsi qu'une durée de croissance vers cette puissance (et avantageusement une durée de maintien de cette puissance déterminée). Ainsi, les postes de conversion 11 à 13 reçoivent et mémorisent leur consigne respective, préalablement à l'apparition d'un défaut. Ces consignes sont appliquées par les postes de conversion 11 à 13 lorsqu'ils détectent un défaut sur un pôle. Les postes de conversion 11 à 13 disposant des consignes préalablement à la détection d'un défaut, la compensation de puissance face à un défaut peut se faire en un temps particulièrement réduit.

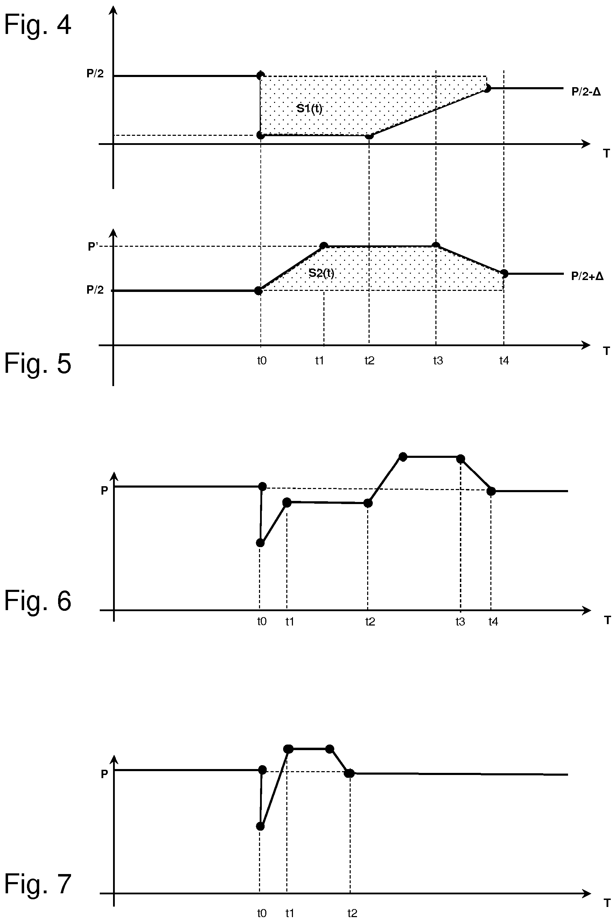

La figure 4 illustre l'évolution de la puissance échangée sur un pôle continu subissant un défaut. La figure 5 illustre l'évolution de la puissance échangée sur un pôle continu sain.

Jusqu'à l'instant T = t0, aucune défaillance n'est identifiée sur le réseau. Le pôle correspondant à la figure 4 est utilisé pour échanger la moitié de la puissance électrique du réseau 1, le pôle correspondant à la figure 5 étant utilisé pour échanger l'autre moitié de la puissance électrique du réseau 1. La puissance électrique totale échangée par le réseau 1 sera notée P. Les postes de conversion 11 à 13 ont reçu et mémorisé des consignes de puissance accrue et des durée de croissance vers cette puissance, envoyées par le dispositif de contrôle 15.

À l'instant t0, un des postes de conversion détecte un défaut sur une des lignes haute tension connectées à un pôle continu. Ce poste de conversion subit alors une baisse quasiment instantanée de la puissance échangée sur ce pôle en défaut comme illustré à la figure 4. La ligne haute tension concernée par le défaut peut alors être isolée de façon connue en soi par la suite.

Le poste de conversion applique alors les consignes de puissance accrue et la durée de croissance vers cette puissance sur son convertisseur connecté au pôle sain. Ce convertisseur met alors en œuvre une augmentation progressive de la puissance instantanée échangée sur le pôle sain.

Mêmes non synchrones, les postes de conversion 11 à 13 détectent chacun le défaut en un temps réduit, typiquement compris entre 5 et 10 ms. Chacun des postes de conversion appliquant les consignes préalables du dispositif de contrôle 15 sur son convertisseur connecté au pôle sain, la puissance échangée sur le pôle sain devient rapidement suffisante, ce qui permet de ne pas altérer la stabilité transitoire du réseau 1. Avantageusement, les durées de croissance vers la valeur de puissance de consigne sont identiques pour chacun des postes de conversion 11 à 13.

Ainsi, comme illustré entre les instants t0 et t1 à la figure 5, la puissance échangée sur le pôle sain évolue selon une rampe d'une valeur P/2 initiale jusqu'à une valeur accrue P', correspondant à la somme des puissances de consigne définies par le dispositif de contrôle 15 et envoyées au préalable aux postes de conversion.

A l'instant t2, le dispositif de contrôle 15 détermine que le défaut a disparu ou que la ligne haute tension concernée par le défaut a été isolée. Le dispositif de contrôle 15 commande alors une augmentation progressive de la puissance sur le pôle en défaut et le maintien de la puissance P' sur le pôle sain. Le dispositif de contrôle 15 envoie une valeur de consigne de puissance à échanger sur le pôle en défaut à chacun des postes de conversion. La somme des consignes de puissance envoyées vaut ici (P/2 - Δ), avec Δ une diminution de puissance tenant compte de l'isolation de la ligne haute tension en défaut, et donc d'une plus faible capacité d'échange de puissance sur ce pôle en défaut. La valeur de puissance échangée sur le pôle en défaut atteint la valeur (P/2 - Δ) après une durée de diminution prédéfinie.

À l'instant t3, la durée maximale de maintien de la puissance transitoire P' est atteinte. Le dispositif de contrôle 15 envoie une valeur de consigne de puissance à échanger sur le pôle sain à chacun des postes de conversion. La somme des consignes de puissance envoyées vaut ici (P/2 + Δ). La valeur de puissance échangée sur le pôle sain atteint la valeur (P/2 + Δ) après une durée de croissance prédéfinie, à l'instant t4.

Le dispositif de contrôle 15 est avantageusement configuré pour que l'excédent de puissance échangée (par rapport à P/2, l'excédent étant illustré par la surface S2(t) à la figure 5) sur le pôle sain entre les instants t0 et t4 soit équilibré par le déficit de puissance échangée (par rapport à P/2, le déficit étant illustré par la surface S1(t) à la figure 4) sur le pôle en défaut entre l'instant t0 et l'instant où la puissance sur le pôle en défaut atteint la valeur (P/2 - Δ). L'équilibrage entre cet excédent de puissance et ce déficit de puissance peut être réalisé en jouant sur l'inclinaison de la rampe entre t0 et t1, en fonction de la durée de maintien de la puissance P', en fonction de l'inclinaison de la rampe sur le pôle en défaut à partir de l'instant t2, et en fonction de l'inclinaison de la rampe sur le pôle sain à partir de l'instant t3.

Les figures 6 et 7 illustrent la somme de puissance échangée sur deux pôles en fonction du niveau de puissance transitoire disponible pour les postes de conversion.

Si la puissance P' disponible est inférieure à P, on se retrouve dans la configuration de la figure 6. Dans ce cas de figure, une compensation de la perte de puissance sur le pôle en défaut ne peut être réalisée avant l'instant t2, correspondant à une isolation du défaut et à une augmentation progressive de la puissance sur le pôle en défaut. Dans cette configuration, on constate que la somme de puissance chute à l'instant t0, augmente progressivement jusqu'à t1 du fait de l'augmentation progressive de la puissance sur le pôle sain, puis est maintenue constante entre t1 et t2 après que les postes de conversion aient atteint la puissance correspondant à la consigne de puissance transitoire. Entre t1 et t2, cette somme est inférieure à P. Lors de l'augmentation de puissance sur le pôle en défaut à partir de l'instant t2, la somme de puissance augmente jusqu'à dépasser la valeur P. Lorsqu'une compensation de puissance suffisante est obtenue à l'instant t3, la puissance échangée sur le pôle sain baisse progressivement par rapport à la somme des consignes de puissance transitoire.

Si la puissance P' disponible est supérieure à P, on se retrouve dans la configuration de la figure 7. Dans ce cas de figure, une compensation de la perte de puissance sur le pôle en défaut peut être réalisée avant l'instant t2. Dans cette configuration, on constate que la somme de puissance chute à l'instant t0, augmente progressivement jusqu'à t1 du fait de l'augmentation progressive de la puissance sur le pôle sain. A l'instant t1, la somme de puissance dépasse la valeur P, puisque la somme des puissances transitoire des postes de conversion sur le pôle sain dépasse cette valeur P. A partir de t1, cette somme de puissance est donc supérieure à P. Une compensation de puissance suffisante est obtenue avant l'instant t2. La puissance échangée sur le pôle sain baisse progressivement par rapport à la somme des consignes de puissance transitoire, jusqu'à la valeur P. Lors de l'augmentation de puissance sur le pôle en défaut à l'instant t2, une diminution de puissance proportionnelle est mise en œuvre sur le pôle sain.

Un exemple de dysfonctionnement du réseau 1 peut être étudié dans un cas pratique. Le dispositif de contrôle 15 disposera au préalable d'informations mémorisées dans la base de données 16, telles que la puissance transitoire admissible pour chacun des pôles de l'interface continu des postes de conversion (notée $Ps_{ij}$, l'indice i désignant le pôle concerné, l'indice j désignant le poste de conversion concerné), et la durée admissible pour cette puissance transitoire (notée $Ts_{ij}$), pour gérer une puissance transitoire supérieure à la puissance nominale. La base de données 16 pourra en outre mémoriser d'autres informations concernant chacun des pôles de l'interface continu d'un convertisseur, comme sa puissance nominale $P_{ij}$ et sa tension nominale, définissant son point de fonctionnement. Le dispositif de contrôle 15 disposera également de la mesure de la puissance instantanée échangée par chacun des postes de conversion sur chaque pôle. Sur la base de ces informations, le dispositif de contrôle 15 pourra déterminer des points de fonctionnement de chacun des convertisseurs MMC, pour faire face à un défaut. Le dispositif de contrôle 15 pourra ainsi déterminer une consigne de puissance et une consigne de tension (sensiblement égale à la tension nominale) à appliquer sur chaque pôle de l'interface continu par les convertisseurs MMC des postes de conversion 11 à 13.

La consigne de puissance $P'_{ij}$ pour le pôle i de l'interface continu (pôle sain utilisé en compensation) sera par exemple définie par les règles suivantes :

$$0 = \sum_{j=1}^{3} P'_{ij} + P_{ls}$$

(En prenant avantageusement en compte les pertes en ligne Pis sur le pôle i du réseau 1)

et

$$P'_{ij} \le Ps_{ij}$$

La durée de maintien de la puissance transitoire sera désignée par $T's_{ij}$ et respectera la règle suivante :

$$T's_{ij} \le Ts_{ij}$$

Le dispositif de contrôle 15 pourra aussi déterminer une durée de croissance progressive Ttr commune vers l'ensemble des consignes de puissance transitoire

P'$_{ij}$. La durée de croissance sera par exemple avantageusement inférieure à 100ms, de préférence inférieure à 50ms, par exemple de l'ordre de 20 ms.

Le dispositif de contrôle 15 pourra aussi déterminer une consigne de puissance P"$_{ij}$ pour un fonctionnement postérieur au rétablissement de la puissance sur le pôle en défaut et postérieur à l'isolation d'une ligne haute tension sur ce pôle. P"$_{ij}$ pourra par exemple être défini comme P"$_{ij}$ = P$_{ij}$ + Δ

En commandant un échange de puissance nul sur le pôle en défaut, le dispositif de contrôle 15 permet de ne pas tenir compte du type et de l'emplacement du défaut, la compensation de puissance étant effectuée sur un pôle sain.

On supposera par exemple que le réseau alternatif 91 consomme initialement une puissance électrique de 800 MW, répartie en 400 MW sur le pôle positif, et 400 MW sur le pôle négatif. On supposera par exemple que le réseau alternatif 93 fournit initialement une puissance électrique de 500 MW, répartie en 250 MW sur le pôle positif, et 250 MW sur le pôle négatif. On supposera par exemple que le réseau alternatif 93 fournit initialement une puissance électrique de 300 MW, répartie en 150 MW sur le pôle positif, et 150 MW sur le pôle négatif. On supposera qu'une défaillance intervient sous la forme d'un court-circuit sur la ligne haute tension 233 à proximité du pôle négatif du poste de conversion 13. Les flèches illustrées à la figure 1 identifient les réseaux alternatifs 92 et 93 comme sources de puissance électrique, le réseau alternatif 91 étant consommateur de puissance électrique.

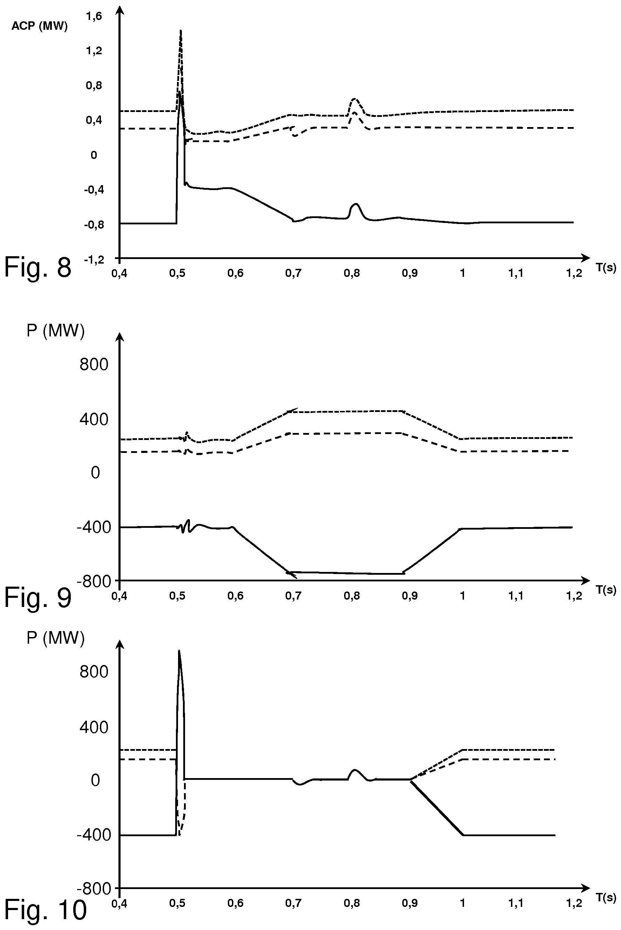

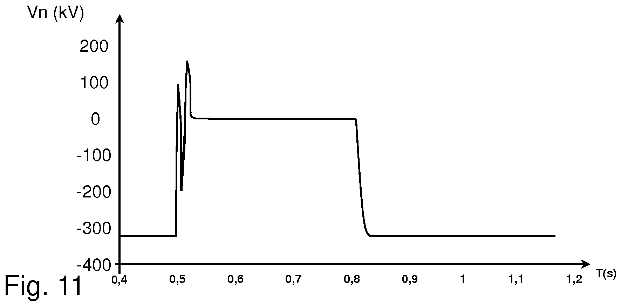

Les figures 8 à 11 illustrent différents paramètres électriques en fonction du temps sur le réseau 1 lors de la mise en œuvre du procédé de contrôle lors de l'apparition d'une telle défaillance. La figure 8 représente la puissance active sur l'interface alternatif des postes de conversion 11 à 13. La courbe en trait plein correspond au poste 11, la courbe en pointillés correspond au poste 12, et la courbe en trait discontinu correspond au poste 13. La figure 9 illustre la puissance échangée sur le pôle sain pour les postes de conversion 11 à 13. La figure 10 illustre la puissance échangée sur le pôle en défaut pour les postes de conversion 11 à 13. La figure 11 illustre le potentiel sur le pôle en défaut.

Jusqu'à l'instant t = 0,5s, le fonctionnement du réseau 1 est normal. Le dispositif de contrôle 15 détermine au préalable un besoin de maintenir une puissance électrique de 800 MW consommée par le réseau alternatif 91. Dans cet exemple, le dispositif de contrôle 15 détermine que le poste de conversion 12 est capable de fournir 500 MW transitoirement sur un pôle sain, et que le poste de conversion 13 est capable de fournir 300 MW sur un pôle sain. Le dispositif de contrôle 15 envoie à chacun des postes de conversion :

- une consigne de puissance transitoire accrue à échanger sur le pôle sain;
- une durée de croissance vers la consigne de puissance transitoire accrue;
- une durée maximale de maintien de la puissance transitoire accrue.

À l'instant t = 0,5s, la défaillance intervient. Après une phase transitoire, la puissance active sur l'interface alternatif des postes de conversion 11 à 13 chute de moitié, jusqu'à t=0,6s, soit une durée d'environ 100 ms. En effet, après cette phase transitoire, la puissance échangée sur le pôle en défaut devient nulle, la puissance échangée sur le pôle sain restant sensiblement constante jusqu'à t=0,6s (la tension sur le pôle sain restant sensiblement égale à la tension nominale). Après cette phase transitoire, le potentiel sur le pôle en défaut devient également nul. Les convertisseurs MMC connectés au pôle en défaut peuvent détecter le défaut et se bloquer pour protéger leurs composants. Les postes de conversion 11 à 13 détectent la défaillance pendant cet intervalle. Pendant cet intervalle, la ligne haute tension en défaut 233 est isolée, par exemple par ouverture des interrupteurs à ses extrémités. Les postes de conversion 11 à 13 appliquent les consignes reçues au préalable du dispositif de contrôle 15, à leur convertisseur respectif connecté au pôle sain.

Ainsi, entre t=0,6s et t=0,7s :

- la puissance échangée par le poste de conversion 11 sur le pôle sain passe de 400 à 800 MW ;
- la puissance échangée par le poste de conversion 12 sur le pôle sain passe de 250 à 500 MW ;
- la puissance échangée par le poste de conversion 13 sur le pôle sain passe de 150 à 300 MW ;
- la tension sur le pôle sain reste égale à la tension nominale ;
- la puissance échangée par les différents postes de conversion sur le pôle en défaut reste nulle. La tension sur le pôle en défaut reste nulle ;
- les postes de conversion reprennent le contrôle de leur convertisseur MMC connecté au pôle en défaut. Ces convertisseurs MMC sont débloqués.

A t= 0,7s, le niveau de puissance échangée avec les réseaux locaux alternatifs 91 à 93 est rétabli, ce qui permet de garantir la stabilité de ces réseaux. Entre t= 0,7s et t=0,9s, la puissance transitoire accrue est maintenue sur le pôle sain par les postes de conversion 11 à 13.

Le dispositif de contrôle 15 envoie des consignes :

- pour que les convertisseurs connectés au pôle en défaut échangent de la puissance électrique sur ce pôle, avec une rampe, jusqu'à une puissance de consigne. La rampe jusqu'à la puissance de consigne peut typiquement présenter une durée inférieure à 100ms. La puissance échangée sur le pôle initialement en défaut atteint la puissance de consigne à t=1s;

- pour que les convertisseurs connectés au pôle sain réduisent la puissance électrique échangée sur ce pôle sain, avec une rampe, jusqu'à une nouvelle puissance de consigne. La rampe jusqu'à la puissance de consigne peut typiquement présenter une durée inférieure à 100ms. La puissance échangée sur le pôle sain atteint cette nouvelle puissance de consigne à t=1s.

Le contrôle du potentiel par les postes de conversion 11 à 13 sur le pôle sain peut par exemple être réalisé par une méthode dite maître-esclave (pour Master-Slave en langue anglaise), ou encore par une méthode dite de contrôle de statisme en tension (pour droop control en langue anglaise), méthodes connues dans le domaine du contrôle de tension dans des réseaux HVDC.
L'exemple décrit précédemment est appliqué à un réseau 1 maillé. L'invention s'applique bien entendu également à un réseau à structure arborescente ou en étoile, avec des nœuds d'interconnexion des lignes haute tension.

## Revendications

1. Procédé de contrôle d'un réseau haute tension (1) à courant continu à multiples nœuds, le réseau comprenant :

    - des lignes électriques haute tension (121, 123, 131, 133, 231, 233) ;
    - au moins des premier à troisième postes de conversion (11, 12,13) comportant chacun :

        - une interface réseau continu comportant des premier et deuxième pôles (141,142,143) connectés à un autre desdits postes de conversion par l'intermédiaire de deux desdites lignes électriques haute tension, et connectés à encore un autre desdits postes de conversion par l'intermédiaire de deux autres desdites lignes électriques haute tension ;
        - une interface réseau alternatif (91) ;
        - au moins deux convertisseurs AC/DC (101,102) connectés entre l'interface réseau alternatif et l'interface réseau continu et configurés pour maintenir une tension nominale constante sur lesdits premier et deuxième pôles et pour appeler ou injecter des courants différents sur ces premier et deuxième pôles, lesdits convertisseurs étant configurés pour recevoir une consigne de courant et une consigne de durée de croissance, les deux convertisseurs étant configurés pour appeler ou injecter une intensité accrue correspondant à une consigne de courant sur un desdits pôles avec la tension nominale à l'issue d'une durée au plus égale à la consigne de durée de croissance ;

    - un dispositif de contrôle (15) configuré pour communiquer avec chacun desdits postes de conversion (11, 12, 13) et accédant à une base de données mémorisant une valeur d'intensité maximale à la tension nominale et la durée de croissance correspondante pour chacun desdits convertisseurs des postes de conversion ;
    - le procédé comprenant les étapes :

        - le dispositif de contrôle (15) détermine les puissances échangées par lesdits convertisseurs sur leurs pôles respectifs ;
        - le dispositif de contrôle détermine une puissance accrue à échanger en compensation sur le deuxième pôle des premier à troisième postes de conversion en cas de défaut sur une desdites lignes haute tension connectée au premier pôle d'un des premier à troisième postes de conversion en fonction du pôle en défaut et en fonction des valeurs d'intensité maximale mémorisées dans la base de données ;
        - le dispositif de contrôle (15) envoie une consigne auxdits premier à troisième postes de conversion, la consigne incluant la puissance déterminée à échanger sur ledit deuxième pôle ainsi qu'une durée de croissance vers cette puissance déterminée ; puis
        - détection d'un défaut sur le premier pôle par les premier à troisième postes de conversion ;
        - pendant une phase d'isolation de faute, en maintenant la tension nominale sur leur deuxième pôle, les premier à troisième postes de conversion accroissent progressivement la puissance échangée sur le deuxième pôle jusqu'à la valeur de consigne pendant ladite durée de croissance de consigne, puis maintiennent cette puissance à la valeur de consigne.

2. Procédé de contrôle selon la revendication 1, dans lequel ladite ligne haute tension entre le premier pôle du premier poste de conversion et le premier pôle du deuxième poste de conversion est isolée pendant la phase d'isolation de faute.

3. Procédé de contrôle selon la revendication 1 ou 2, dans lequel lesdits convertisseurs des postes de conversion sont de type convertisseur modulaire multi-niveau, MMC.

4. Procédé de contrôle selon l'une quelconque des revendications précédentes, dans lequel ladite intensité accrue pour chacun desdits convertisseurs est une intensité supérieure à son intensité nominale pour sa tension nominale, chacun desdits convertisseurs étant configuré pour appeler ou injecter ladite intensité accrue pendant une durée de maintien maximale prédéfinie.

5. Procédé de contrôle selon la revendication 4, dans lequel le dispositif de contrôle déterminant une durée prédéfinie de maintien d'une puissance accrue à échanger sur ledit deuxième pôle des premier à troisième postes de conversion, la consigne envoyée auxdits premier à troisième postes de conversion incluant la durée de maintien prédéfinie de la puissance accrue, lesdits convertisseurs maintenant ladite puissance accrue à la valeur de consigne pendant la durée de maintien prédéfinie de la consigne envoyée.

6. Procédé de contrôle selon l'une quelconque des revendications 3 à 5, dans lequel chacun desdits convertisseurs est configuré pour pouvoir échanger une puissance accrue au moins égale à 150% de sa puissance nominale pendant ladite durée de maintien prédéfinie.

7. Procédé de contrôle selon l'une quelconque des revendications 3 à 6, dans lequel ladite durée de maintien d'une intensité accrue sur un desdits pôles par chacun desdits convertisseurs MMC est au moins égale à 100 ms.

8. Procédé de contrôle selon l'une quelconque des revendications 1 à 3, dans lequel ladite intensité accrue pour chacun desdits convertisseurs est son intensité nominale pour sa tension nominale.

9. Procédé de contrôle selon l'une quelconque des revendications 3 à 8, dans lequel ledit dispositif de contrôle (15) commande le maintien des puissances déterminées sur le deuxième pôle pendant une durée telle que la somme de l'augmentation de puissance échangée sur le deuxième pôle compense la somme de la réduction de puissance échangée sur le premier pôle.

10. Procédé de contrôle selon l'une quelconque des revendications précédentes, dans lequel ledit dispositif de contrôle (15) envoie une consigne de synchronisation de la puissance déterminée à échanger sur le deuxième pôle.

11. Procédé de contrôle selon la revendication 10, dans lequel ledit dispositif de contrôle (15) envoie une même durée de croissance vers la puissance déterminée auxdits premier à troisièmes postes de conversion (11, 12,13).

12. Procédé de contrôle selon l'une quelconque des revendications précédentes, comprenant une phase de rétablissement de service sur le premier pôle, ledit dispositif de contrôle (15) envoyant une nouvelle consigne à chacun desdits premier à troisième postes de conversion, la nouvelle consigne incluant une puissance réduite à échanger sur le deuxième pôle pendant la phase de rétablissement de service, puissance réduite par rapport auxdites puissance déterminées.

13. Procédé de contrôle selon la revendication 10, dans lequel, ledit dispositif de contrôle (15) envoyant une autre consigne à chacun desdits premier à troisième postes de conversion, l'autre consigne incluant une puissance à échanger sur le premier pôle pendant la phase de rétablissement de service.

14. Procédé de contrôle selon la revendication 13, dans lequel la puissance à échanger sur le deuxième pôle dans la nouvelle consigne est supérieure à la puissance à échanger sur le premier pôle dans l'autre consigne.

15. Procédé de contrôle selon l'une quelconque des revendications précédentes, dans lequel les deux convertisseurs sont configurés pour appeler ou injecter une intensité accrue correspondant à une consigne de courant sur un desdits pôles avec la tension nominale à l'issue d'une durée de croissance au plus égale à 100 ms.

**Patentansprüche**

1. Verfahren zur Steuerung eines Hochspannungsnetzes (1) mit Gleichstrom und mehreren Knoten, wobei das Netz Folgendes umfasst:

    - elektrische Hochspannungsleitungen (121, 123, 131, 133, 231, 233);
    - mindestens eine erste bis dritte Umrichterstation (11, 12, 13), jeweils umfassend:

        - eine Gleichstromnetzschnittstelle, umfassend einen ersten und zweiten Pol (141, 142, 143), die mit einer anderen der Umrichterstationen durch zwei der elektrischen Hochspannungsleitungen verbunden sind und mit noch einer anderen der Umrichterstationen durch zwei andere der elektrischen Hochspannungsleitungen verbunden sind;
        - eine Wechselstromnetzschnittstelle (91);
        - mindestens zwei AC/DC-Wandler (101, 102), die zwischen der Wechselstromnetzschnittstelle und der Gleichstromnetzschnittstelle angeschlossen und konfiguriert sind, um eine konstante Nennspannung an dem ersten und zweiten Pol zu halten und um unterschiedliche Ströme an dem ersten und zweiten Pol aufzurufen oder einzuspeisen, wobei die Wandler konfiguriert sind, um einen Stromsollwert und einen Sollwert der Anstiegsdauer zu empfangen, wobei die zwei Wandler konfiguriert sind, um eine erhöhte Stromstärke aufzurufen oder einzuspeisen, die einem Stromsollwert an einem der Pole mit der Nennspannung am Ende einer Dauer entspricht, die höchstens dem Sollwert der Anstiegsdauer entspricht;

- eine Steuervorrichtung (15), die konfiguriert ist, um mit jeder der Umrichterstationen (11, 12, 13) zu kommunizieren und auf eine Datenbank zugreift, in der ein Wert der maximalen Stromstärke bei der Nennspannung und die entsprechende Anstiegsdauer für jeden der Wandler der Umrichterstationen gespeichert sind;
- wobei das Verfahren die folgenden Schritte umfasst:

     - die Steuervorrichtung (15) bestimmt die Leistungen, die durch die Wandler an ihren jeweiligen Polen ausgetauscht werden;
     - die Steuervorrichtung bestimmt eine erhöhte Leistung, die zum Ausgleich an dem zweiten Pol der ersten bis dritten Umrichterstation im Falle einer Störung in einer der an den ersten Pol von einer der ersten bis dritten Umrichterstationen angeschlossenen Hochspannungsleitungen in Abhängigkeit von dem Pol mit einer Störung und in Abhängigkeit von den in der Datenbank gespeicherten Werten der maximalen Stromstärke ausgetauscht werden soll;
     - die Steuervorrichtung (15) schickt einen Sollwert an die erste bis dritte Umrichterstation, wobei der Sollwert die bestimmte auszutauschende Leistung an dem zweiten Pol sowie eine Anstiegsdauer bis zu der bestimmten Leistung einschließt; ferner
     - Detektion einer Störung an dem ersten Pol durch die erste bis dritte Umrichterstation;
     - während einer Störungsisolierungsphase erhöhen die erste bis dritte Umrichterstation, indem die Nennspannung an ihrem zweiten Pol beibehalten wird, die an dem zweiten Pol ausgetauschte Leistung während der Sollanstiegsdauer allmählich bis auf den Einstellwert und halten dann diese Leistung bei dem Einstellwert.

2.  Verfahren zur Steuerung nach Anspruch 1, wobei die Hochspannungsleitung zwischen dem ersten Pol der ersten Umrichterstation und dem ersten Pol der zweiten Umrichterstation während der Störungsisolierungsphase isoliert ist.

3.  Verfahren zur Steuerung nach Anspruch 1 oder 2, wobei die Wandler der Umrichterstationen zum Typ Modular-Multilevel-Wandler, MMC, gehören.

4.  Verfahren zur Steuerung nach einem der vorhergehenden Ansprüche, wobei die erhöhte Stromstärke für jeden der Wandler einer Stromstärke entspricht, die größer als sein Nennstrom für seine Nennspannung ist, wobei jeder der Wandler konfiguriert ist, um die erhöhte Stromstärke während einer vordefinierten maximalen Haltezeit aufzurufen oder einzuspeisen.

5.  Verfahren zur Steuerung nach Anspruch 4, wobei die Steuervorrichtung eine vordefinierte Haltezeit einer erhöhten Leistung bestimmt, die an dem zweiten Pol der ersten bis dritten Umrichterstation ausgetauscht werden soll, wobei der Sollwert, der an die erste bis dritte Umrichterstation geschickt wird, die vordefinierte Haltezeit der erhöhten Leistung einschließt, wobei die Wandler die erhöhte Leistung während der vordefinierten Haltezeit des geschickten Sollwerts bei dem Einstellwert halten.

6.  Verfahren zur Steuerung nach einem der Ansprüche 3 bis 5, wobei jeder der Wandler konfiguriert ist, um eine erhöhte Leistung, die mindestens 150 % seiner Nennleistung entspricht, während der vordefinierten Haltezeit austauschen zu können.

7.  Verfahren zur Steuerung nach einem der Ansprüche 3 bis 6, wobei die Haltezeit einer erhöhten Stromstärke an einem der Pole durch jeden der MMC-Wandler mindestens 100 ms entspricht.

8.  Verfahren zur Steuerung nach einem der Ansprüche 1 bis 3, wobei die erhöhte Stromstärke für jeden der Wandler seinem Nennstrom für seine Nennspannung entspricht.

9.  Verfahren zur Steuerung nach einem der Ansprüche 3 bis 8, wobei die Steuervorrichtung (15) das Halten der bestimmten Leistungen an dem zweiten Pol während einer Dauer befiehlt, sodass die Summe der Erhöhung der ausgetauschten Leistung an dem zweiten Pol die Summe der Verringerung der ausgetauschten Leistung an dem ersten Pol ausgleicht.

10.  Verfahren zur Steuerung nach einem der vorhergehenden Ansprüche, wobei die Steuervorrichtung (15) einen Synchronisationssollwert der bestimmten an dem zweiten Pol auszutauschenden Leistung schickt.

**11.** Verfahren zur Steuerung nach Anspruch 10, wobei die Steuervorrichtung (15) die gleiche Anstiegsdauer bis zu der bestimmten Leistung an die erste bis dritte Umrichterstation (11, 12,13) schickt.

**12.** Verfahren zur Steuerung nach einem der vorhergehenden Ansprüche, umfassend eine Dienstwiederherstellungsphase an dem ersten Pol, wobei die Steuervorrichtung (15) einen neuen Sollwert an jede der ersten bis dritten Umrichterstation schickt, wobei der neue Sollwert eine verringerte an dem zweiten Pol während der Dienstwiederherstellungsphase auszutauschende Leistung einschließt, wobei die Leistung in Bezug auf die bestimmten Leistungen verringert ist.

**13.** Verfahren zur Steuerung nach Anspruch 10, wobei die Steuervorrichtung (15) einen anderen Sollwert an jede der ersten bis dritten Umrichterstation schickt, wobei der andere Sollwert eine an dem ersten Pol während der Dienstwiederherstellungsphase auszutauschende Leistung einschließt.

**14.** Verfahren zur Steuerung nach Anspruch 13, wobei die an dem zweiten Pol auszutauschende Leistung in dem neuen Sollwert größer als die an dem ersten Pol auszutauschende Leistung in dem anderen Sollwert ist.

**15.** Verfahren zur Steuerung nach einem der vorhergehenden Ansprüche, wobei die zwei Wandler konfiguriert sind, um eine erhöhte Stromstärke aufzurufen oder einzuspeisen, die einem Stromsollwert an einem der Pole mit der Nennspannung am Ende einer Anstiegsdauer entspricht, die höchstens 100 ms entspricht.

**Claims**

**1.** Method for controlling a high voltage direct current network (1) with multiple nodes, the network comprising:

- high voltage power lines (121, 123, 131, 133, 231, 233);
- at least first to third converter stations (11, 12, 13) each including:

  - a direct current network interface including first and second poles (141,142,143) connected to another of said conversion stations by means of two of said high voltage power lines, and connected to yet another of said conversion stations by means of another two of said high voltage power lines;
  - an alternating current network interface (91);

  - at least two AC/DC converters (101,102) connected between the alternating current network interface and the direct current network interface and configured to hold a constant rated voltage at said first and second poles and to call up or inject different currents at these first and second poles, said converters being configured to receive a current setpoint and a growth time setpoint, the two converters being configured to call up or inject an increased intensity corresponding to a current setpoint at one of said poles with the rated voltage at the end of a time at least equal to the growth time setpoint;

- a control device (15) configured to communicate with each of said conversion stations (11,12,13) and acceding to a database storing a maximum intensity value at the rated voltage and the corresponding growth time for each of said converters of the conversion stations;
- the method comprises the steps:

  - the control device (15) determines the power values exchanged by said converters at their respective poles;
  - the control device determines an increased power value to be exchanged as compensation at the second pole of the first to third conversion stations in the event of a defect on one of said high voltage lines connected to the first pole of one of the first to third conversion stations according to the defective pole and according to the maximum intensity values stored in the database;
  - the control device (15) sends a setpoint to said first to third conversion stations, the setpoint including the determined power to exchange at said second pole as well as a growth time to this determined power value; then
  - detection of a defect at the first pole by the first to third conversion stations;
  - during a fault isolation phase, while holding the rated voltage at their second poles, the first to third conversion stations progressively increase the power exchanged at the second pole to the setpoint value during said setpoint growth time, then hold this power at the setpoint value.

**2.** Control method according to Claim 1, wherein said high voltage line between the first pole of the first conversion station and the first pole of the second conversion station is isolated during the fault isolation phase.

3. Control method according to Claim 1 or 2, wherein said converters of the conversion stations are of the modular multi-level converter, MMC type.

4. Control method according to any one of the preceding claims, wherein said increased intensity for each of said converters is an intensity greater than its rated intensity for its rated voltage, each of said converters being configured to call up or inject said increased intensity during a predefined maximum holding time.

5. Control method according to Claim 4, wherein the control device determining a predefined time for holding an increased power to exchange at said second pole of the first to third conversion stations, the setpoint sent to said first to third conversion stations including the predefined time for holding the increased power, said converters holding said increased power at the setpoint value for the predefined time for holding the sent set point.

6. Control method according to any one Claims 3 to 5, wherein each of said converters is configured to be able to exchange an increased power equal to at least 150% of its rated power during said predefined holding time.

7. Control method according to any one Claims 3 to 6, wherein said time for holding an increased intensity at one of said poles by each of said MMC converters is equal to at least 100 ms.

8. Control method according to any one Claims 1 to 3, wherein said increased intensity for each of said converters is its rated intensity for its rated voltage.

9. Control method according to any one Claims 3 to 8, wherein said control device (15) controls holding the determined power values at the second pole for a time such that the sum of the power increase exchanged at the second pole offsets the sum of the power reduction exchanged at the first pole.

10. Control method according to any one of the preceding claims, wherein said control device (15) sends a setpoint for synchronising the determined power to be exchanged at the second pole.

11. Control method according to Claim 10, wherein said control device (15) sends the same growth time to the determined power at said first to third conversion stations (11, 12,13).

12. Control method according to any one of the preceding claims, comprising a reinstatement of service phase at the first pole, said control device (15) sending a new setpoint to each of said first to third conversion stations, the new setpoint including a reduced power to exchange at the second pole during the reinstatement of service phase, power reduced with respect to said determined power values.

13. Control method according to Claim 10, wherein, said control device (15) sending another setpoint to each of said first to third conversion stations, the other setpoint including a power to exchange at the first pole during the reinstatement of service phase.

14. Control method according to Claim 13, wherein the power to exchange at the second pole in the new setpoint is greater than the power to exchange at the first pole in the other setpoint.

15. Control method according to any one of the preceding claims, wherein the two converters are configured to call up or inject increased intensity corresponding to a current setpoint at one of said poles with the rated voltage at the end of a growth time equal at most to 100 ms.

Fig. 1

Fig. 2

Fig. 3

Fig. 4

Fig. 5

Fig. 6

Fig. 7

Fig. 8

Fig. 9

Fig. 10

Vn (kV)

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013258724 A1

**Littérature non-brevet citée dans la description**

- Challenges with Multi-Terminal UHVDC Transmissions. **LESCALE, V. F. et al.** POWER SYSTEM TECHNOLOGY AND IEEE POWER INDIA CONFERENCE, 2008. POWERCON 2008. JOINT INTERNATIONAL CONFERENCE ON. IEEE, 12 Octobre 2008, 1-7

- Assessing the impact of multi-terminal HVDC grids for wind intégration on future scénarios of a real-world AC power system using grid code compliant open models. **CIAPESSONI EMANUELE et al.** IEEE MANCHESTER POWERTECH. IEEE, 18 Juin 2017, 1-6